# EUROPEAN PATENT SPECIFICATION

(11) **EP 3 529 386 B1**
(45) Date of publication and mention of the grant of the patent: **14.04.2021**
(21) Application number: 17804984.7
(22) Date of filing: 20.10.2017
(51) Int. Cl.: H01F 1/147, H01F 1/16, H01F 3/02, H01F 41/02, B32B 15/01, C21D 6/00, C21D 8/02, C21D 8/04, C21D 8/12, C21D 9/52, C22C 38/02, C22C 38/04, C22C 38/10, C22C 38/12

(54) **REDUCING ORDERED GROWTH IN SOFT-MAGNETIC FE-CO ALLOYS**
REDUZIERUNG VON GEORDNETEM WACHSTUM BEI WEICHMAGNETISCHEN FE-CO-LEGIERUNGEN
RÉDUCTION DE LA CROISSANCE ORDONNÉE DANS DES ALLIAGES FE-CO À AIMANTATION TEMPORAIRE

(30) Priority: 21.10.2016 US 201662410926 P
(43) Date of publication of application: 28.08.2019
(73) Proprietor: CRS Holdings, Inc., Wilmington, DE 19801 (US)
(72) Inventor: FITTERLING, Eric, M., Macungle PA 18062 (US)
(74) Representative: Mewburn Ellis LLP
(86) International application number: PCT/US2017/057576
(87) International publication number: WO 2018/075882

(56) References cited:
- US-A- 3 597 286
- US-A1- 2004 089 377
- US-A1- 2008 042 505

## Description

### BACKGROUND OF THE INVENTION:

### Field of the Invention:

This invention relates to a process for making an article of manufacture from an equiatomic, soft-magnetic, Fe-Co alloy and to a useful article made therefrom.

### Description of the Related Art:

Equiatomic, soft-magnetic Fe-Co alloys, including the Fe-Co-2V alloy, are known and have been used primarily to make laminated components for the stators and rotors of electric motors and generators. The known Fe-Co alloys provide a combination of soft magnetic properties together with good strength, ductility, and processability. Parts fabricated from these alloys are usually annealed to reduce stresses in the alloy material and to obtain the desired combination of magnetic and mechanical properties. The alloys undergo a transition from the disordered state to an ordered state when heat treated. The disordered phase is characterized by a random distribution of the Fe and Co atoms in the unit cells of the body-centered-cubic (bcc) lattice structure of the alloy. In the ordered phase, the Fe and Co atoms occupy specific locations in the unit cells throughout the crystal lattice structure.

Prior to the post-fabrication annealing heat treatment, the alloy is in the disordered state. However, when the alloy is cooled from the annealing temperature it transforms to the ordered state as it cools through the ordering temperature (T_{Order}). T_{Order} is about 730°C (about 1345°F) for the soft magnetic Fe-Co alloys to which the present invention applies. The disordered phase of the alloy has a larger coefficient of thermal expansion (CTE) than the ordered phase. Consequently, during the post-fabrication heat treatment parts made from the alloy undergo a net increase in size because of the different CTE's of the two phases. In other words, the alloy grows more during heating than it shrinks during cooling. That phenomenon results in the net increase in the size of a part made from the alloy after the post-fabrication heat treatment.

The net size increase is difficult to account for because the inventor has determined that the net size increase is significantly greater in the rolling direction than in the direction transverse to the rolling direction. Manufacturers of laminated parts made from the Fe-Co soft magnetic alloys have few techniques to account for unsymmetrical net size change of the annealed finished parts. The extent of the net size change is difficult to assess because it is affected by such factors as the complex shapes that may be fabricated, the thermal stresses induced during heat treatment, and the mechanical stresses associated with the fabrication techniques used, such as stamping. Consequently, the net size change is not always uniform or consistent.

There has been an increasing demand for tighter tolerance laminations and parts made from Fe-Co soft magnetic alloys to meet the ever more challenging engineering design criteria for electric motors and generators. In order to meet that demand a need has arisen to be able to limit or control the net size change of parts fabricated from the equiatomic soft-magnetic Fe-Co alloys in order to better meet the tighter tolerance requirements

US 3597286 A discloses a process that performs a pre- and post-fabrication anneal on Fe-Co alloys to tailor mechanical and magnetic characteristics.

### SUMMARY OF THE INVENTION:

The dimension-related problems associated with the manufacturing of parts from the known equiatomic Fe-Co alloys are resolved to a large degree by the process of claim 1 in accordance with the present invention. According to the invention there is provided a process for making an article of manufacture from a soft-magnetic Fe-Co alloy. The process includes a step of providing a substantially flat, elongated length of a soft-magnetic Fe-Co alloy wherein the Fe-Co alloy has a structure that is characterized by consisting essentially of a disordered phase. The process also includes a prefabrication or intermediate annealing step in which the elongated length of the soft-magnetic steel alloy is annealed before it is fabricated into parts. The prefabrication annealing step is carried out at a temperature that is greater than the ordering temperature of the alloy. The process further includes the step of cooling the alloy from the annealing temperature at a rate that is selected to cause substantial transformation of the disordered phase of the soft-magnetic Fe-Co alloy to an ordered phase thereof, whereby the soft-magnetic Fe-Co alloy undergoes a change in size. After the prefabrication annealing step, the elongated length of the alloy is fabricated into an article of manufacture. The article is then a given a post-fabrication annealing heat treatment that is carried out under conditions of atmosphere, temperature, and time selected to obtain a desired combination of magnetic and mechanical properties in the article of manufacture.

Here and throughout this specification the following definitions apply. The term "Fe-Co alloy" means an alloy having a total Fe+Co content of more than 90 atomic percent and in which the ratio Fe:Co is about 0.33 to about 3. The alloy may include small amounts of additional elements that are added to benefit particularly desired properties and will typically include the usual impurities found in other alloys intended for the same or similar service. The term "percent" or the symbol "%" means percent by weight unless otherwise indicated. The term "disordered" means a crystal lattice structure having unit cells in which the iron and cobalt atoms are randomly arranged. The term "ordered" means a crystal lattice structure having unit cells in which the iron and cobalt atoms occupy specific sites in the crystal lattice unit cell throughout the alloy.

### BRIEF DESCRIPTION OF THE DRAWINGS:

The following detailed description as well as the foregoing summary of the invention will be better understood when read in conjunction with the drawings wherein:
Figure 1 is a block diagram of an embodiment of the process according to the present invention;
Figure 2 is a schematic illustration of a soft magnetic Fe-Co alloy article made by the known process; and
Figure 3 is a schematic illustration of a soft magnetic Fe-Co alloy article made by the process according to the present invention.

### DETAILED DESCRIPTION:

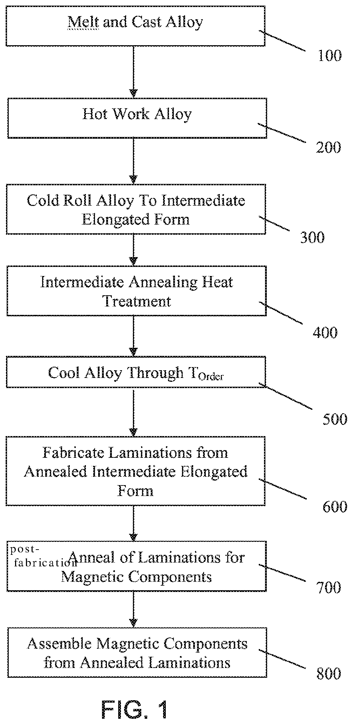

Referring now to Figure 1, there is shown an embodiment of the process according to the present invention. Initial Steps 100-300 of the process according to this invention provide a substantially flat, elongated length of a soft-magnetic steel alloy. The elongated length of the alloy is prepared as indicated in Step 100 by melting an Fe-Co alloy. The alloy may contain small amounts of other elements that benefit particularly desired properties as known to those skilled in the art. For example, in one embodiment the alloy may contain about 2% vanadium. In another embodiment, the alloy may contain about 0.3% columbium. In a further embodiment, the alloy may contain about 0.3% tantalum and about 1.15% vanadium. In a still further embodiment the alloy may contain about 0.3% of each of tantalum and vanadium. The alloy may contain about 0.010% carbon and in some embodiments not more than about 0.001% carbon. The process of this invention is particularly applicable to the Fe-Co alloys described in US 5,501,747; US 3,634,072; and EP 1 145 259, the entireties of which are incorporated herein by reference. More specifically, the process of this invention is broadly applicable to soft-magnetic alloys containing 45-55% cobalt, 0.5-2.5% vanadium, optionally 0.02-0.5% niobium and/or tantalum, 0.003- 0.50% carbon, or 0.07-0.3% zirconium, and the balance being iron and impurities.

The alloy can be melted by any conventional melting technique, but the alloy is preferably melted by vacuum induction melting (VIM). The molten alloy is cast into one or more ingots and allowed to solidify and cool to room temperature. In step 200 the alloy ingot is preferably hot worked, such as by pressing, cogging, or rolling to billet or bar form, followed by hot rolling to provide an intermediate elongated article such as thick strip, rod, or bar. The intermediate elongated article is cold rolled as in Step 300 to a cross-sectional area and thickness that are selected based on the final form of the parts to be fabricated from the material. Preferably the cold rolled intermediate article is realized as strip material having a thickness and width that are selected for making laminated parts for stators and rotors used in electric motors and generators. The cold rolling step may be performed in one or more reductions.

Prior to the fabrication of the laminated parts, the alloy used to make the cold rolled elongated intermediate article has a lattice structure that consists essentially of a disordered phase as described above. In Step 400, the cold rolled elongated intermediate article is annealed prior to fabrication of part laminations in order to minimize the net size change in the laminations and the parts assembled therefrom that would otherwise occur during post-fabrication annealing of such parts. The pre-fabrication annealing step is carried out under conditions of temperature, time, and atmosphere that promote the transformation of the alloy to the ordered phase. It is only necessary that a substantial portion of the alloy transform to the ordered phase to obtain the benefit of the pre-fabrication annealing step. A substantial portion of the alloy is considered to be transformed to the ordered phase when the degree of ordering achieved is greater than 40% by volume and preferably greater than 50% by volume. More specifically, the pre-fabrication annealing step includes heating the cold rolled intermediate elongated article at a temperature that is greater than the ordering temperature of the Fe-Co alloy. The cold rolled intermediate elongated article is then cooled as indicated in Step 500 at a rate that is sufficient to cause the alloy to transform to the ordered state as the alloy cools down through the ordering temperature from the annealing temperature.

The prefabrication annealing step may be carried out by heating the elongated intermediate form of the alloy at a temperature that is above the temperature at which the ordered phase becomes metastable (e.g., about 600°C), but not higher than the temperature at which the austenitic phase becomes thermodynamically stable (e.g., about 871°C). Preferably, the prefabrication annealing step is carried out by heating the elongated intermediate form of the alloy at a temperature that is above the temperature at which the ordered phase becomes stable (e.g., about 700°C), but not higher than the temperature at which the austenitic phase becomes thermodynamically stable. The elongated intermediate form is preferably strand annealed in a non-oxidizing atmosphere with a feed-through rate sufficient to heat the alloy at the annealing temperature for at least about 1 minute. The elongated intermediate form is preferably cooled in air from the annealing temperature. The non-oxidizing atmosphere is preferably dry hydrogen, i.e., hydrogen gas having a dew point of -40°F (-40°C) or lower.

After the intermediate elongated article is cooled to room temperature it can be formed into laminations having a shape that is selected based on the design of the part to be made from the laminations. The laminations may be fabricated by stamping the cold rolled elongated article as indicated in Step 600. The laminations may be formed by other cutting techniques known to those skilled in the art including, but not limited to, laser cutting, electrical discharge machining (EDM), photo etching, and water jet cutting. The laminations are batch annealed in the post-fabrication annealing step as in Step 700 in a protective atmosphere under conditions of temperature and time that are selected to provide a combination of mechanical and magnetic properties sufficient to withstand the high physical stresses that will be encountered in service. The laminated parts are post-fabrication annealed by heating at a temperature of 1300 to 1600°F (704 to 871°C), e.g. for 2-4 hours in dry hydrogen. The heated parts are then cooled from the annealing temperature at a rate of 250-400F° (139-222C°) per hour down to about 600°F (316°C) after which the parts are cooled at any rate to room temperature. The protective atmosphere is preferably dry hydrogen. The shaped laminations are then stacked and bonded together to form the magnetic component as indicated in Step 800.

The process according to the present invention provides a significant advantage compared to the known processes for making laminated soft magnetic articles from equiatomic Fe-Co alloys. The intermediate, prefabrication annealing step provides an elongated alloy article having a structure that is characterized by substantial transformation of the disordered phase to the ordered phase of the alloy. When the shaped laminations are subsequently annealed, the net increase in size of the laminations after post-fabrication annealing heat treatment is significantly less than when the prefabrication annealing step is not performed. The inventor has observed that the use of the intermediate annealing step results in about a 63% reduction in size change in the rolling direction and about a 55% reduction in size change in the transverse direction. Furthermore, the inventor has determined that the net size change in the transverse direction is significantly more symmetrical with the net size change in the rolling direction.

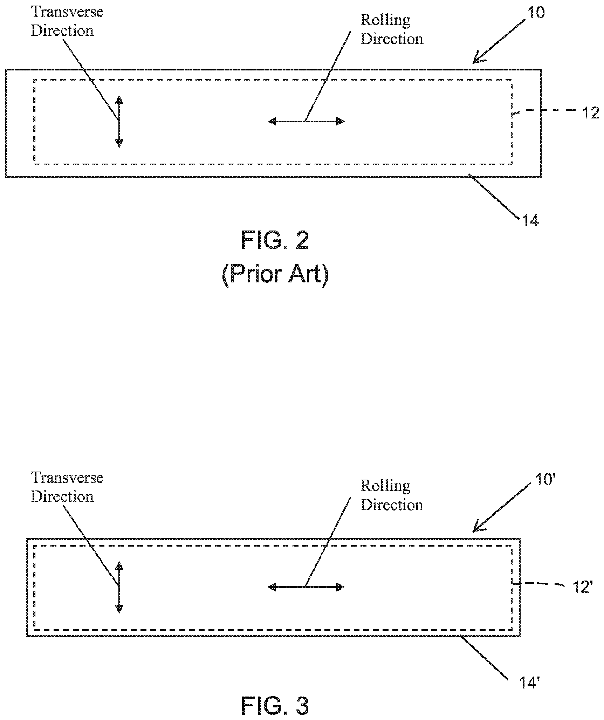

The advantage provided by the process according to the present invention is illustrated in Figures 2 and 3. Figure 2 shows a segment of strip material or a stamped lamination made by a known process. The strip segment or lamination 10 has a first profile 12 in the cold rolled condition as described above. After the strip segment or lamination is annealed it has a net size change as illustrated by the larger, second profile 14. As can be seen in Figure 2, the net size change is greater in the rolling direction than in the transverse direction. Figure 3 shows a segment of strip material or a lamination 10' made by the process of the present invention. The strip segment or lamination 10' has a first profile 12' after being cold rolled and then heat treated with the intermediate annealing heat treatment according to the present invention. After the strip segment or lamination is annealed after fabrication, it undergoes a net size change as illustrated by the second profile 14'. As seen in Figure 3, the net size change of the strip segment or lamination is generally smaller than with the known processing. Moreover, the net size change is more symmetrical in both the rolling direction and the transverse direction.

### Working Examples

In order to demonstrate the effectiveness of the process according to the present invention comparative testing was performed on samples of HIPERCO® 50 iron-cobalt-vanadium alloy. The HIPERCO 50 alloy has a nominal weight percent composition of 0.01% carbon, 0.05% manganese, 0.05% silicon, 48.75% cobalt, 0.05% niobium, and 1.90% vanadium. The balance of the alloy is iron and usual impurities. The test specimens were prepared from two ingots that were cast after vacuum induction melting and then vacuum arc remelted (VAR) after solidification. The VAR ingots were forged to billet form and then hot rolled to strip form having a first intermediate thickness. The strip from each ingot was annealed, cold rolled to a second intermediate thickness, cold rolled to final thickness, and then cut to a preselected final width.

The strip produced from one ingot was annealed in accordance with the process according to the present invention as described at page 5 above and then cooled to room temperature. The strip produced from the other ingot was not annealed. Two sets of shaped laminations were fabricated by stamping the annealed strip material. The first set of shaped laminations had an inside diameter of 2.680 in. and an outside diameter of 5.4761 in. and the second set of shaped laminations had an inside diameter of 5.51925 in. and an outside diameter of 7.1045 in., wherein lin. = 25.4mm.

An additional two sets of shaped laminations were stamped from the unannealed strip material. The first set of the additional shaped laminations had an inside diameter of 2.680 in. and an outside diameter of 5.4761 in. and the second set of the additional shaped laminations had an inside diameter of 5.51925 in. and an outside diameter of 7.1045 in. The four sets of shaped laminations were batch annealed and then cooled to room temperature in accordance with the usual practice for the HIPERCO 50 alloy and as described generally at page 6 above.

The inside and outside diameters of eleven (11) of the pre-annealed, 5.4761 in. OD, shaped laminations and twelve (12) of the pre-annealed 7.1045 in. OD shaped laminations were measured after fabrication and again after post-fabrication annealing. The inside and outside diameters of nine (9) of the unannealed, shaped laminations were measured after fabrication and again after post-fabrication annealing. The amount of growth realized after the post-fabrication anneal was determined for each part. The measured diameters (I.D. and O.D.) are presented in Tables 1A and 1B below in inches.

**TABLE 1A**

| | **Fabricated I.D.** | | **Post-anneal I.D.** | | **Fabricated O.D.** | | **Post-anneal O.D.** | |
|---|---|---|---|---|---|---|---|---|
| **Part No.** | **Inv.** | **Std.** | **Inv.** | **Std.** | **Inv.** | **Std.** | **Inv.** | **Std.** |
| 1 | 2.68 | 2.6803 | 2.6803 | 2.68315 | 5.4762 | 5.4765 | 5.4767 | 5.48196 |
| 2 | 2.6801 | 2.6803 | 2.6802 | 2.68312 | 5.4762 | 5.4766 | 5.4767 | 5.482 |
| 3 | 2.6801 | 2.6804 | 2.6803 | 2.68304 | 5.4765 | 5.4764 | 5.4769 | 5.48179 |
| 4 | 2.68 | 2.6803 | 2.6802 | 2.68294 | 5.4764 | 5.4763 | 5.477 | 5.48162 |
| 5 | 2.6801 | 2.6803 | 2.6802 | 2.68309 | 5.4762 | 5.4765 | 5.477 | 5.48163 |
| 6 | 2.6801 | 2.68035 | 2.6803 | 2.68299 | 5.4762 | 5.47655 | 5.4771 | 5.48169 |
| 7 | 2.6802 | 2.68024 | 2.68 | 2.683 | 5.4762 | 5.4761 | 5.4769 | 5.48154 |
| 8 | 2.6801 | 2.68014 | 2.6801 | 2.68304 | 5.4762 | 5.4761 | 5.4771 | 5.48117 |
| 9 | 2.68 | 2.68014 | 2.6799 | 2.68296 | 5.4762 | 5.4761 | 5.4769 | 5.48117 |
| 10 | 2.6799 | - - - | 2.6806 | - - - | 5.4757 | - - - | 5.4784 | - - - |
| 11 | 2.68 | - - - | 2.6806 | - - - | 5.4763 | - - - | 5.4787 | - - - |

**TABLE 1B**

| | **Fabricated I.D.** | | **Post-anneal I.D.** | | **Fabricated O.D.** | | **Post-anneal O.D.** | |
|---|---|---|---|---|---|---|---|---|
| **Part No.** | **Inv.** | **Std.** | **Inv.** | **Std.** | **Inv.** | **Std.** | **Inv.** | **Std.** |
| 1 | 5.5181 | 5.51925 | 5.5182 | 5.52478 | 7.1044 | 7.1045 | 7.1084 | 7.11123 |
| 2 | 5.5179 | 5.51925 | 5.5197 | 5.5254 | 7.1044 | 7.1045 | 7.1055 | 7.11213 |
| 3 | 5.518 | 5.51925 | 5.5197 | 5.52485 | 7.1045 | 7.1045 | 7.1055 | 7.11102 |
| 4 | 5.5181 | 5.51824 | 5.5199 | 5.52516 | 7.1045 | 7.10383 | 7.1051 | 7.11241 |
| 5 | 5.5181 | 5.51847 | 5.5187 | 5.52461 | 7.1045 | 7.10422 | 7.1073 | 7.11111 |
| 6 | 5.5181 | 5.51828 | 5.5168 | 5.5243 | 7.1045 | 7.1036 | 7.0996 | 7.10998 |
| 7 | 5.518 | 5.51794 | 5.5187 | 5.52342 | 7.1045 | 7.10365 | 7.1046 | 7.11059 |
| 8 | 5.5178 | 5.51802 | 5.5188 | 5.52512 | 7.1045 | 7.10402 | 7.1061 | 7.11129 |
| 9 | 5.518 | 5.5181 | 5.5223 | 5.52502 | 7.1048 | 7.10421 | 7.1076 | 7.11134 |
| 10 | 5.5179 | - - - | 5.5248 | - - - | 7.1044 | - - - | 7.1055 | - - - |
| 11 | 5.5178 | - - - | 5.5195 | - - - | 7.1045 | - - - | 7.1053 | - - - |
| 12 | 5.5179 | - - - | 5.5258 | - - - | 7.1044 | - - - | 7.1055 | - - - |

The magnitudes of the growth in size of the parts (Δ) were determined by calculating the differences in the measured I.D.'s and O.D.'s of the sets of parts from the measurements presented in Tables 1A and 1B and are presented in Table 2 below. All values are in inches.

**TABLE 2**

| | **ΔID₁** | | **ΔOD₁** | | **AID₂** | | **AOD₂** | |
|---|---|---|---|---|---|---|---|---|
| **Part No.** | **Inv.** | **Std.** | **Inv.** | **Std.** | **Inv.** | **Std.** | **Inv.** | **Std.** |
| 1 | 0.0003 | 0.00285 | 0.0005 | 0.00546 | 0.0001 | 0.00553 | 0.004 | 0.00673 |
| 2 | 0.0001 | 0.00282 | 0.0005 | 0.0054 | 0.0018 | 0.00615 | 0.0011 | 0.00763 |
| 3 | 0.0002 | 0.00264 | 0.0004 | 0.00539 | 0.0017 | 0.0056 | 0.001 | 0.00652 |
| 4 | 0.0002 | 0.00264 | 0.0006 | 0.00532 | 0.0018 | 0.00692 | 0.0006 | 0.00858 |
| 5 | 0.0001 | 0.00279 | 0.0008 | 0.00513 | 0.0006 | 0.00614 | 0.0028 | 0.00689 |
| 6 | 0.0002 | 0.00264 | 0.0009 | 0.00514 | -0.0013 | 0.00602 | -0.0049 | 0.00638 |
| 7 | -0.0002 | 0.00276 | 0.0007 | 0.00544 | 0.0007 | 0.00548 | 0.0001 | 0.00694 |
| 8 | 0 | 0.0029 | 0.0009 | 0.00507 | 0.001 | 0.0071 | 0.0016 | 0.00727 |
| 9 | -0.0001 | 0.00282 | 0.0007 | 0.00507 | 0.0043 | 0.00692 | 0.0028 | 0.00713 |
| 10 | 0.0007 | - - - | 0.0027 | - - - | 0.0069 | - - - | 0.0011 | - - - |
| 11 | 0.0006 | - - - | 0.0024 | - - - | 0.0017 | - - - | 0.0008 | - - - |
| 12 | - - - | - - - | - - - | - - - | 0.0079 | - - - | 0.0011 | - - - |
| Average | 0.00019 | 0.00276 | 0.00101 | 0.00527 | 0.00227 | 0.00621 | 0.00101 | 0.00712 |

It is clear from the data in Table 2 that the magnitude of the size growth of the ring laminations processed according the present invention is significantly smaller than the magnitude of the size growth of the ring laminations given the standard processing. To emphasize the difference realized from the use of the process of the present invention compared to the standard processing Table 3 below presents the average growth of the parts processed according to the invention as a percentage of the average growth of the standard processing parts.

**TABLE 3**

| **%Std. ΔID₁** | **%Std. ΔOD₁** | **%Std. ΔID₂** | **%Std. ΔOD₂** |
|---|---|---|---|
| 7% | 19% | 37% | 14% |

It is evident from Table 3 that the laminations processed with the method according the present invention had significantly less growth after the post-fabrication annealing heat treatment than the parts prepared with the standard process.

The terms and expressions which are employed in this specification are used as terms of description and not of limitation. There is no intention in the use of such terms and expressions of excluding any equivalents of the features shown and described or portions thereof.

## Claims

1. A process for making an article of manufacture from a soft-magnetic Fe-Co alloy comprising the following steps in this order:
providing a substantially flat, elongated article formed of a soft-magnetic Fe-Co alloy, said Fe-Co alloy having a crystal lattice structure that consists essentially of a disordered phase by carrying out the following steps:
melting and casting the Fe-Co alloy to provide an ingot;
hot working the ingot to form an intermediate elongated strip; and then
cold rolling the intermediate elongated strip to a final thickness;
performing a pre-fabrication annealing step at 600-870°C in a non-oxidizing atmosphere followed by cooling in air to room temperature;
fabricating an article of manufacture from the elongated article of the Fe-Co alloy; and then
post-fabrication annealing the article of manufacture at 704-871 °C in a protective atmosphere followed by cooling at 133-222°C/h to 316°C and further cooling to room temperature.

2. The process as claimed in Claim 1 wherein the Fe-Co alloy comprises, in weight percent, about 45-55% cobalt, about 0.5-2.5% vanadium, about 0.02-0.5% niobium-plus-tantalum, optionally about 0.003-0.50% carbon or 0.07-0.3% zirconium, and the balance being iron and impurities.

3. The process as claimed in Claim 1 wherein the melting step comprises the steps of vacuum induction melting the Fe-Co alloy, casting the alloy into an ingot, and then vacuum arc remelting the ingot.

4. The process as claimed in Claim 1 wherein the pre-fabrication annealing temperature is at least 700°C.

5. The process as claimed in Claim 1 wherein the step of fabricating the article of manufacture comprises forming laminations from the elongated article of the Fe-Co alloy.

6. The process as claimed in Claim 1 wherein the pre-fabrication annealing step is carried out by strand annealing the elongated article at a feed-through rate sufficient to heat the alloy at the ordering annealing temperature for at least 1 minute.

7. The process as claimed in Claim 1 wherein the non-oxidizing atmosphere is dry hydrogen gas.

8. The process as claimed in Claim 1 wherein the protective atmosphere is dry hydrogen gas.

## Patentansprüche

1. Verfahren zur Herstellung eines Erzeugnisses aus einer weichmagnetischen Fe-Co-Legierung, das die folgenden Schritte in dieser Reihenfolge umfasst:
das Bereitstellen eines im Wesentlichen flachen, länglichen Formteils aus einer weichmagnetischen Fe-Co-Legierung, wobei die Fe-Co-Legierung eine Kristallgitterstruktur aufweist, die im Wesentlichen aus einer verzerrten Phase besteht, durch das Durchführen folgender Schritte:
das Schmelzen und Gießen der Fe-Co-Legierung, um einen Ingot bereitzustellen;
das Heißbearbeiten des Ingots, um einen länglichen Zwischenproduktstreifen auszubilden; und dann
das Kaltwalzen des länglichen Zwischenproduktstreifens zu einer Enddicke;
das Durchführen eines Vorfertigungsglühschritts bei 600-870 °C unter einer nicht oxidierenden Atmosphäre und anschließend das Abkühlen an der Luft auf Raumtemperatur;
das Fertigen eines Erzeugnisses aus dem länglichen Formteil der Fe-Co-Legierung; und dann
das Glühen des Erzeugnisses nach der Fertigung bei 704-871 °C unter Schutzatmosphäre und anschließend das Abkühlen bei 133-222 °C/h auf 316 °C und weiteres Abkühlen auf Raumtemperatur.

2. Verfahren nach Anspruch 1, wobei die Fe-Co-Legierung etwa 45-55 Gew.-% Kobalt, etwa 0,5-2,5 Gew.-% Vanadium, etwa 0,02-0,5 Gew.-% Niob plus Tantal, gegebenenfalls etwa 0,003-0,50 Gew.-% Kohlenstoff oder 0,07-0,3 Gew.-% Zirconium und als Rest Eisen und Verunreinigungen umfasst.

3. Verfahren nach Anspruch 1, wobei der Schmelzschritt die Schritte des Vakuuminduktionsschmelzens der Fe-Co-Legierung, des Gießens der Legierung in einen Ingot und dann des Vakuumlichtbogenumschmelzens des Ingots umfasst.

4. Verfahren nach Anspruch 1, wobei die Vorfertigungsglühtemperatur zumindest 700 °C beträgt.

5. Verfahren nach Anspruch 1, wobei der Schritt des Fertigens des Erzeugnisses das Ausbilden von Laminaten aus dem länglichen Formteil der Fe-Co-Legierung umfasst.

6. Verfahren nach Anspruch 1, wobei der Vorfertigungsglühschritt durch Strangglühen des länglichen Formteils in einer Durchführungsrate durchgeführt wird, die ausreicht, um die Legierung zumindest 1 Minute bei der geforderten Glühtemperatur zu erhitzen.

7. Verfahren nach Anspruch 1, wobei die nicht oxidierende Atmosphäre trockenes Wasserstoffgas ist.

8. Verfahren nach Anspruch 1, wobei die Schutzatmosphäre trockenes Wasserstoffgas ist.

## Revendications

1. Procédé de fabrication d'un article manufacturé à partir d'un alliage Fe-Co faiblement magnétique comprenant dans cet ordre les étapes suivantes consistant à :
fournir un article allongé sensiblement plat formé d'un alliage Fe-Co faiblement magnétique,
ledit alliage Fe-Co ayant une structure de réseau cristallin qui consiste essentiellement en une phase désordonnée en effectuant les étapes suivantes consistant à :
faire fondre et couler l'alliage Fe-Co pour donner un lingot ;
usiner à chaud le lingot pour former une bande allongée intermédiaire ; puis
laminer à froid la bande allongée intermédiaire jusqu'à une épaisseur finale ;
réaliser une étape de recuit de préfabrication à une température comprise entre 600 à 870°C dans une atmosphère non oxydante suivie d'un refroidissement à l'air jusqu'à température ambiante ;
fabriquer un article manufacturé à partir de l'article allongé de l'alliage Fe-Co ; puis
réaliser un recuit de post-fabrication de l'article manufacturé à une température comprise entre 704 et 871°C dans une atmosphère protectrice suivi d'un refroidissement à une température comprise entre 133 et 222°C/h jusqu'à 316°C et d'un refroidissement supplémentaire jusqu'à température ambiante.

2. Procédé selon la revendication 1, dans lequel l'alliage Fe-Co comprend, en pourcentage en poids, environ 45 à 55 % de cobalt, environ 0,5 à 2,5 % de vanadium, environ 0,02 à 0,5 % de niobium plus tantale, facultativement environ 0,003 à 0,5 % de carbone ou 0,07 à 0,3 % de zirconium, le reste étant du fer et des impuretés.

3. Procédé selon la revendication 1, dans lequel l'étape de fusion comprend les étapes de fusion par induction sous vide de l'alliage Fe-Co, de coulée de l'alliage en un lingot, puis de refusion à l'arc sous vide du lingot.

4. Procédé selon la revendication 1, dans lequel la température de recuit de préfabrication est d'au moins 700°C.

5. Procédé selon la revendication 1, dans lequel l'étape de fabrication de l'article manufacturé comprend une formation de tôles magnétiques à partir de l'article allongé de l'alliage Fe-Co.

6. Procédé selon la revendication 1, dans lequel l'étape de recuit de préfabrication est réalisée par recuit en continu au déroulé de l'article allongé à un taux de traversée suffisant pour chauffer l'alliage à la température de recuit de commande pendant au moins 1 minute.

7. Procédé selon la revendication 1, dans lequel l'atmosphère non oxydante est de l'hydrogène gazeux sec.

8. Procédé selon la revendication 1, dans lequel l'atmosphère protectrice est de l'hydrogène gazeux sec.
